# EUROPÄISCHE PATENTSCHRIFT

(11) **EP 1 671 454 B1**
(45) Veröffentlichungstag und Bekanntmachung des Hinweises auf die Patenterteilung: **09.09.2009**
(21) Anmeldenummer: 04787042.3
(22) Anmeldetag: 28.09.2004
(51) Int. Cl.: H04L 12/28, G06F 1/00

(54) **HOMEBUS-SYSTEM**
HOMEBUS SYSTEM
SYSTEME DE BUS DOMESTIQUE

(30) Priorität: 02.10.2003 DE 10345949
(43) Veröffentlichungstag der Anmeldung: 21.06.2006
(73) Patentinhaber: Giesecke & Devrient GmbH, 81677 München (DE)
(72) Erfinder: CIESINGER, Daniel, 85764 Oberschleissheim (DE)
(86) Internationale Anmeldenummer: PCT/EP2004/010863
(87) Internationale Veröffentlichungsnummer: WO 2005/034430

(56) Entgegenhaltungen:
- US-A1- 2002 133 413
- PALENSKY P ET AL: "Security considerations for FAN-Internet connections" FACTORY COMMUNICATION SYSTEMS, 2000. PROCEEDINGS. 2000 IEEE INTERNATIONAL WORKSHOP ON PORTO, PORTUGAL 6-8 SEPT. 2000, PISCATAWAY, NJ, USA,IEEE, US, 6. September 2000 (2000-09-06), Seiten 27-35, XP010521792 ISBN: 0-7803-6500-3
- URIEN P: "Internet card, a smart card as a true Internet node" COMPUTER COMMUNICATIONS, ELSEVIER SCIENCE PUBLISHERS BV, AMSTERDAM, NL, Bd. 23, Nr. 17, 1. November 2000 (2000-11-01), Seiten 1655-1666, XP004238469 ISSN: 0140-3664
- NICOLA KING E.AL.: "SMART HOME ? A DEFINITION"[Online] September 2003 (2003-09), XP002308738 KNOWLHILL Gefunden im Internet: URL:http://www.dh.gov.uk/assetRoot/04/05/0 7/46/04050746.pdf> [gefunden am 2004-12-02]

## Beschreibung

Die Erfindung betrifft ein Homebus-System. Weiterhin betrifft die Erfindung ein Verfahren zum Betreiben eines Homebus-Systems.

Es ist bereits bekannt mehrere Geräte bzw. Anlagen eines Gebäudes mittels eines Netzwerks miteinander zu verbinden. Ein derartiges Netzwerk wird üblicherweise als Homebus bezeichnet.

So offenbart die JP 03080793 A ein System, bei dem auf einer Chipkarte gespeicherte Voreinstellungen über einen Homebus beispielsweise an ein Terminal eines Badezimmers übermittelt werden können. Das Terminal stellt daraufhin den Wasserstand und die Wassertemperatur in der Badewanne entsprechend den empfangenen Voreinstellungen ein.

Aus der JP 2001126000 A ist es bekannt, Daten zwischen einem Homebus und einer Chipkarte mittels eines Terminals zu übertragen, das mit der Chipkarte elektrisch und mit dem Homebus optisch oder elektromagnetisch gekoppelt ist.

Aus der JP 03177187 A ist eine Anordnung bekannt, bei der eine Steuerung eines elektrischen Türöffners über einen Homebus mit einer Überwachungseinrichtung zu vernetzt ist, die beispielsweise einen Gasaustritt detektiert. Wenn ein Fehler detektiert wird, wird ein Alarmsignal, das die Art des Fehlers angibt, in Form eines Infrarotsignals an eine Chipkarte übermittelt, die über eine Anzeigevorrichtung zur Anzeige des Fehlers verfügt. Weiterhin wird ein Signal an den elektrischen Türöffner gesandt, um ein Öffnen der Tür zu verhindern. Dadurch wird der Chipkarten-Inhaber über den Fehler informiert, bevor er durch die Tür eintritt.

Aus der Veröffentlichung von P. Palenski, T. Sauter "Security considerations for FAN-Intemet connections" in IEEE 2000, S. 27-35, ist ein Hausautomatisierungssystem bekannt, das mehrere über einen Feldbus verbundene Geräte aufweist und das über ein Gateway über das Internet mit einem Klienten verbunden ist. Über das Gateway und den Feldbus kann der Klient, z.B. ein Energieversorger, auf die Geräte, z.B. Strommeßgeräte, zugreifen. Zur Sicherung der Datenkommunikation zwischen Klient und Geräten wird die Verwendung von Smartcards vorgeschlagen, die eine Verschlüsselung des Datenaustausches zwischen Klient und Geräten vornehmen. Hierzu ist jeweils am Ausgangs- und am Endpunkt einer Datenübertragung eine Smartcard bereitgestellt. Die Lösung erlaubt es einem Klienten, also etwa einem Energieversorger, von einem Gerät, also etwa einem Strommeßgerät, Meßwerte abzufordern.

US 2002/133413 A1 beschreibt ein System zum Bestellen von Waren mit Hilfe eines Fernsehgerätes, das hierzu mit einem Satellitengerät, einer sogenannten Set Top Box verbunden wird, welche einen Chipkartenleser aufweist. Die Verbindung zwischen Fernsehgerät und Satellitengerät kann als Homebus ausgestaltet sein, an den weitere Teilnehmer angeschlossen sind. Das Satellitengerät kann über das Internet mit einem Serviceanbieter in Verbindung stehen. Über das Fernsehgerät werden Waren angeboten, die der Nutzer mittels des Satellitengerätes gegen Vorlage einer Kreditkarte unmittelbar bestellen und bezahlen kann. Die Kreditkarte führt dabei eine wechselseitige Authentisierung mit dem Serviceanbieter durch.

Aus der Veröffentlichung von P. Urian "Internetcard, a smartcard as a true internt note" in Computercommunications 23 (2000), S. 1655-1666, ist ferner der Vorschlag bekannt, eine Smartcard als Webserver oder als Internetproxy einzusetzen.

Der Erfindung liegt die Aufgabe zugrunde, eine sichere und individuelle Kommunikationsmöglichkeit zwischen Komponenten eines Homebussystems und externen Kommunikationspartnern zu schaffen, die gewährleistet, daß die für die Komponenten vorgegebene Einstellung eingehalten und bei Bedarf eine Kommunikation mit einem Kommunikationspartner selbständig abgewickelt wird.

Diese Aufgabe wird durch ein Homebus-System mit der Merkmalskombination des Anspruchs 1 gelöst.

Das erfindungsgemäße Homebus-System weist mehrere Geräte auf, die durch einen Homebus miteinander vernetzt sind. Eines der Geräte ist ein Gateway, das das Homebus-System mit einem externen Netzwerk, z.B. dem Internet, verbindet. Das Gateway sowie alle oder ein Teil der Geräte verfügen über Hardware, die eine Kontaktierung und Kommunikation mit einem tragbaren Datenträger ermöglicht. Die Besonderheit des erfindungsgemäßen Homebus-Systems besteht darin, daß wenigstens ein tragbarer Datenträger zur Unterstützung oder Durchführung der Abwicklung der Kommunikation zwischen Homebus-Geräten und einem externen Kommunikationspartner, der nicht unmittelbar an den Homebus angeschlossen ist, vorgesehen ist.

Die Erfindung hat den Vorteil, daß mit einem vergleichsweise geringen Aufwand eine sichere und individuelle Nutzung des Homebus ermöglicht und insbesondere im Hinblick auf externe Kommunikationspartner eine Vielzahl von Anwendungsmöglichkeiten eröffnet wird.

Der externe Kommunikationspartner kann an ein externes Netzwerk angeschlossen sein, mit dem der Homebus verbunden ist. Dabei ist es von Vorteil, wenn der tragbare Datenträger in der Lage ist, gemäß einem Protokoll des externen Netzwerks zu kommunizieren. Dadurch wird die Kommunikation vereinfacht. Die Datenpakete des externen Kommunikationsprotokolls werden zweckmäßig in Pakete des Homebus verpackt ("Tunneling"), um Protokollumsetzungen zu vermeiden. In einem bevorzugten Ausführungsbeispiel ist der tragbare Datenträger in der Lage, gemäß dem TCP/IP-Protokoll zu kommunizieren. Dieses Protokoll wird auch für die Kommunikation im Internet verwendet, so daß eine Anbindung des erfindungsgemäßen Homebus-Systems an das Internet problemlos möglich ist.

Auf dem tragbaren Datenträger können gerätespezifische und/oder benutzerspezifische Informationen gespeichert sein. Auf diese Weise läßt sich benutzerfreundlich eine Vielzahl von Funktionalitäten realisieren. Insbesondrere können auf dem tragbaren Datenträger für wenigstens eines der Geräte Daten zur Durchführung einer Bestellung gespeichert sein. Die Abwicklung einer Bestellung kann dann weitgehend oder vollständig automatisiert werden.

Erfindungsgemäß kann wenigstens einem der Geräte des Homebus-System ein eigener tragbarer Datenträger zugeordnet sein. Auf diese Weise kann dieses Gerät ohne großen Aufwand mit hochwertigen Sicherheitsfunktionen ausgestattet werden. Weiterhin besteht die Möglichkeit, wenigstens einem Benutzer einen eigenen tragbaren Datenträger zuzuordnen. Dies hat den Vorteil, daß der Benutzer den tragbaren Datenträger nach seinen Bedürfnissen konfigurieren kann.

In einem bevorzugten Ausführungsbeispiel des erfindungsgemäßen Homebus-System ist wenigstens eines der Geräte durch Zuordnung gerätespezifischer Angaben "personalisiert", so daß eine Authentisierung möglich ist. Dadurch wird es beispielsweise dem externen Kommunikationspartner ermöglicht, die Echtheit des Gerätes zu prüfen. Dies ist insbesondere dann von Bedeutung, wenn vom externen Kommunikationspartner kostenpflichtige Leistung erbracht werden sollen.

Der tragbare Datenträger ist vorzugsweise als Chipkarte ausgebildet. Diese sind kostengünstig verfügbar und bieten einen hohen Sicherheitsstandard.

Die Erfindung bezieht sich weiterhin auf ein Verfahren zum Betreiben eines Homebus-Systems, das mehrere Geräte aufweist, die durch einen Homebus miteinander vernetzt sind. Das erfindungsgemäße Verfahren zeichnet sich dadurch aus, daß eine Kommunikation mit einem externen Kommunikationspartner, der nicht unmittelbar an den Homebus angeschlossen ist, mit Hilfe wenigstens eines tragbaren Datenträgers abgewickelt wird.

Im Rahmen des erfindungsgemäßen Verfahrens kann wenigstens eines der Geräte durch Zuordnung gerätespezifischer Daten "personalisiert" werden. Durch die Personalisierung können dem Gerät insbesondere eine Netzadresse und Schlüssel zugeordnet werden. Dadurch ist das Gerät eindeutig identifizierbar.

Bei einem ersten Ausführungsbeispiel wird der tragbare Datenträger zur Personalisierung des Geräts dauerhaft dem Gerät zugeordnet. Diese Art der Personalisierung läßt sich einfach, schnell und sicher durchführen.

Bei einem zweiten Ausführungsbeispiel wird der tragbare Datenträger durch bestimmte Systemmeldungen mit dem entsprechenden Gerät verbunden, so daß dieses Gerät z.B. in Kontakt mit dem externen Netzwerks treten kann, um eine Bestellung durchzuführen.

Bei einem dritten Ausführungsbeispiel wird der tragbare Datenträger dauerhaft oder fallweise einem Gateway zugeordnet, d.h. einem Gerät, das den Homebus mit dem externen Netzwerk koppelt.

Eine Kombination dieser drei Ausführungsbeispiele ist möglich und sinnvoll.

Im Rahmen der Kommunikation mit dem externen Kommunikationspartner kann eine Authentisierung des tragbaren Datenträgers durchgeführt werden, um dem externen Kommunikationspartner die Echtheit des tragbaren Datenträgers nachzuweisen.

Im Rahmen der Kommunikation mit einem externen Kommunikationspartner kann beispielsweise eine Bestellung für eines der Geräte, z.B. Lebensmittel für einen Kühlschrank oder Heizöl für einen Heizkessel, durchgeführt werden. Dabei ist es vorteilhaft, wenn die Durchführung der Bestellung von der Relation zwischen dem tatsächlichen Bestand eines Bestellguts und einem auf dem tragbaren Datenträger gespeicherten Vorgabewert für den Bestand des Bestellguts abhängt. Auf diese Weise kann sichergestellt werden, daß eine Bestellung nur bei einem entsprechenden Bedarf durchgeführt wird.

Die Erfindung wird nachstehend anhand des in der Zeichnung dargestellten Ausführungsbeispiels erläutert.

Es zeigen:
- Fig.1: eine schematisierte Darstellung eines Ausführungsbeispiels des erfindungsgemäßen Homebus-Systems und
- Fig. 2: einen typischen Funktionsablauf für ein Ausführungsbeispiel des erfindungsgemäßen Homebus-Systems,
- Fig. 3: eine schematisierte Darstellung einer Ausführungsvariante des Homebus-Systems.

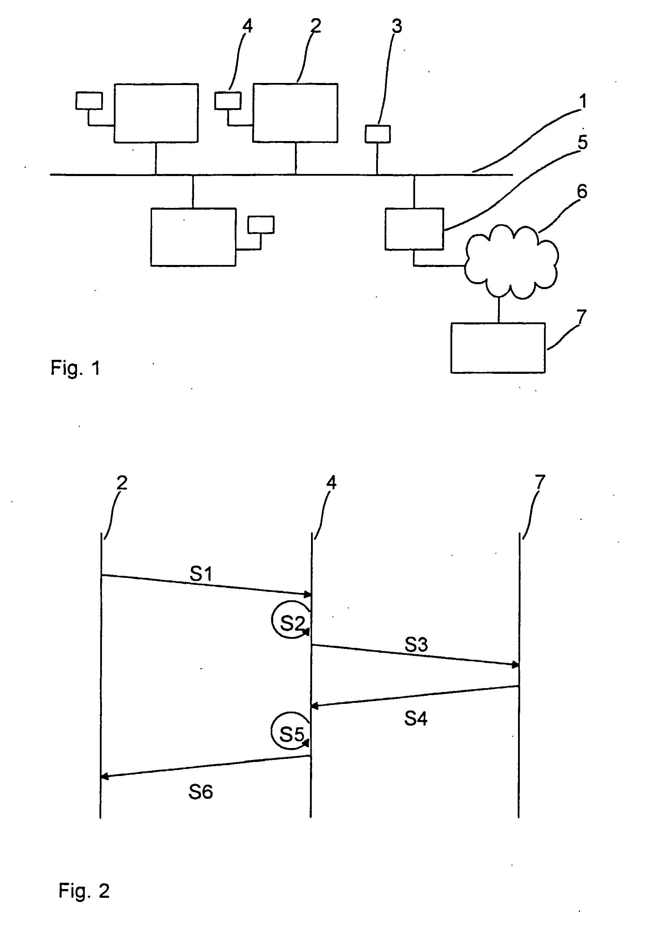

Fig.1 zeigt eine schematisierte Darstellung eines Ausführungsbeispiels des erfindungsgemäßen Homebus-Systems. Über einen Homebus 1 sind mehrere Geräte 2 miteinander vernetzt. Bei den Geräten 2 kann es sich um aktiv genutzte Hausgeräte wie einen Kühlschrank, einen Herd oder eine Waschmaschine, aber auch um Installationsanlagen wie etwa eine Heizungsanlage handeln. Allen Geräten 2 kann jeweils eine Geräte-Chipkarte 4 zugeordnet sein, auf welche das jeweilige Gerät 2 mittels einer üblichen, geeigneten Lesevorrichtung zugreift.

Eines der an den Homebus 1 angeschlossenen Geräte 5 ist als Gateway ausgeführt und fungiert als Netzzugangsgerät zur Herstellung einer Verbindung zu einem externen Netzwerk 6, insbesondere dem Internet. Über das Gateway 5 wird ein Datenaustausch mit einem externen Kommunikationspartner 7, der ebenfalls mit dem externen Netzwerk 6 verbunden ist, ermöglicht.

Dem Gateway 5 ist zumindest eine Benutzer-Chipkarte 3 zugeordnet, auf die das Gateway 5 mittels einer Lesevorrichtung zugreifen kann. In der Regel existieren mehrere, von einer Mehrzahl von Benutzern gehaltene Benutzer-Chipkarten 3, die jeweils nur temporär mit dem Gateway 5 verbunden werden. Beispielsweise kann jedes Mitglied eines Haushalts über eine eigene Benutzer-Chipkarte 3 verfügen.

Befindet sich eine Benutzer-Chipkarte 3 im Zugriff eines Gateways 5, läßt sich eine Reihe von chipkartengestützten Funktionalitäten realisieren. Unter anderem lassen sich Adresse und Bankverbindung eines jeweiligen Benutzers eingegeben, Bestellvorgänge für die Geräte 2 abwickeln, Adressen von Online-Händlern bereitstellen oder Zugriffsrechte einräumen. Insbesondere ist es auch möglich, einen authentisierten Zugriff von außerhalb des Homebus zu realisieren.

Bei dem externen Kommunikationspartner 7 handelt es sich beispielsweise um einen Online-Händler, bei dem über das externe Netzwerk 6 Waren bestellt werden können. Externer Kommunikationspartner 7 kann aber auch ein einfacher Zugang zu dem Netzwerk 6 sein, etwa in Gestalt eines Terminals mit Chipkartenleser, von dem aus unter Verwendung einer Benutzer-Chipkarte 3 eine Fernabfrage des Homebus-Systems vorgenommen wird.

Die Benutzer-Chipkarten 3 und, soweit vorhanden, die Geräte-Chipkarten 4 sind so ausgebildet, daß eine effiziente Kommunikation mit dem externen Kommunikationspartner 7 möglich ist. Vorzugsweise sind die Benutzer-Chipkarten 3 und die Geräte-Chipkarten 4 in der Lage, gemäß einem auch in dem externen Netzwerk 6 verwendeten Protokoll, insbesondere etwa dem TCP/IP-Protokoll zu kommunizieren. So ausgestaltet können Benutzer-Chipkarten 3 auch selbst als externe Kommunikationspartner 7 betrieben werden, d. h. ein Benutzer kann mit Hilfe einer Benutzer-Chipkarte 3 von beliebigen Orten über das externe Netzwerk 6 mit dem Gateway 5 und darüber mit den Geräten 2 kommunizieren. Diese Möglichkeit des Zugriffes von außen kann unter anderem dazu genutzt werden, den Status von über einen Homebus 1 vernetzten Geräten 2 abzufragen. Zum Beispiel kann auf diese Weise von einem entfernten Ort aus festgestellt werden, ob ein an den Homebus 1 angeschlossener Herd eingeschaltet ist oder eine zum Betrieb einer Heizungsanlage erforderliche Ölmenge bereitsteht.

Um Mißbrauch des Zuganges über ein Netzwerk 6 zu verhindern, ist für Zugriffe von außen zweckmäßig vorgesehen, daß eine über das Netzwerk 6 zugreifende Benutzer-Chipkarte 3 sich über eine wechselseitige Authentisierung gegen eine unmittelbar am Gateway 5 befindliche Chipkarte 3 authentisiert.

Ein wichtiger Aspekt des erfindungsgemäßen Homebus-Systems besteht darin, daß die über den Homebus 1 vernetzten Geräte 2 durch Zuweisung von gerätespezifischen Daten jeweils "personalisierbar" sind. Die Realisierung der Personalisierung kann erfolgen, indem jedem Gerät 2 jeweils eine Geräte-Chipkarte 4 zugeordnet wird, auf die das jeweilige Gerät 2 mittels einer Lesevorrichtung zugreift. Auf der Geräte-Chipkarte 4 sind die Personalisierungsdaten gespeichert.

Personalisierungsdaten können insbesondere sein: Eine Bezeichnung des jeweils zugeordneten Gerätes 2 - etwa sein Typ, seine Art und/ oder eine Seriennummer; kryptographische Schlüssel und Zertifikate für die Durchführung einer Kommunikation mit anderen an den Homebus 1 angebundenen Geräten 2, 5 oder externen Kommunikationspartnern 7; Software, um auf Mitteilungen des zugeordneten Gerätes 2 zu reagieren - etwa in Gestalt von Java-Applets; für das zugeordnete Gerät 2 vorgegebene Einstellungen -etwa Mindest- und Höchstmengen bereitzuhaltender Lebensmittel oder Verbrauchsgüter; Informationen zu vorhandenen Lebensmitteln oder Verbrauchsgütern - etwa Haltbarkeitsangaben; Netzwerkeinstellungen; Netzadressen, um ein Gerät 2, 5 über das Netzwerk 6 von einem externen Kommunikationspartner 7 lokalisierbar zu machen; Adressen gegebenenfalls auszuwählender externer Kommunikationspartner 7; Angaben zum Inhalt und Verhalten in einer gegebenenfalls auszuführenden Kommunikation - etwa Preisgrenzen oder Profile für das Bestellverhalten; Identität und Bankverbindung oder Kreditkartennummer einer Person. Desweiteren können auf den Karten Bedarfsprofile gespeichert werden.

Im Regelfall befinden sich nicht alle zur Personalisierung dienenden Daten auf den Geräte-Chipkarten 4. Zweckmäßig erfolgt vielmehr eine Aufteilung der vorhandenen Daten auf Geräte-Chipkarten 4 und Benutzer-Chipkarten 3. Auf den Geräte-Chipkarten 4 liegen dann nur die tatsächlich gerätebezogenen Daten, während die für den Kontakt zum externen Netzwerk 6 erforderlichen.Daten auf einer Benutzer-Chipkarte 3 gespeichert sind, von wo sie über das Gateway 5 verfügbar gemacht werden. Möglich ist auch eine Variante gänzlich ohne Geräte-Chipkarten 4. Alle Daten zur Personalisierung der Gerät 2 liegen dann auf der oder den Benutzer-Chipkarten 3.

Die die Geräte-Chipkarten 4 und die Benutzer-Chipkarten 3 können jeweils mittels eines Personalcomputers konfiguriert werden. Je nach gewünschtem Funktionsablauf werden sämtliche oder eine Untermenge der zuvor erwähnten Daten auf den Benutzer-Chipkarten 3 und/oder den Geräte-Chipkarten 4 gespeichert.

Anhand von Fig. 2 wird im folgenden die Funktionsweise des erfindungsgemäßen Homebus-Systems näher erläutert. Fig. 2 zeigt einen typischen Funktionsablauf für einen mit dem erfindungsgemäßen Homebus-System ausgeführten Kommunikationsvorgang. Der Darstellung zugrundegelegt ist eine Konfiguration, in der den an das Homebus-System angeschlossenen Geräten 2 Geräte-Chipkarten 4 zugeordnet sind, auf denen gerätespezifische Daten gespeichert sind, welche die Geräte personalisieren. Der dargestellte Funktionsablauf repräsentiert beispielsweise einen Bestellvorgang, mit dem ein an den Homebus 1 angeschlossener Kühlschrank, das Gerät 2, aufgrund von auf der Geräte-Chipkarte 4 gespeicherten Sollbestandsdaten Lebensmittel bei einem Online-Händler, dem Kommunikationspartner 7, bestellt.

Der Funktionsablauf beginnt mit einem Schritt S1, in dem Daten vom Gerät 2 an die Geräte-Chipkarte 4 übertragen werden. Beispielsweise meldet der Kühlschrank 2 beim Schließen der Kühlschranktür seinen aktuellen Bestand an Lebensmitteln an die Geräte-Chipkarte 4. Diese bearbeitet die gemeldeten Bestandsdaten daraufhin Schritt S2, indem sie die vom Kühlschrank 2 gemeldeten Vorräte mit auf der Geräte-Chipkarte 4 vermerkten Sollbeständen vergleicht und bei einer Unterschreitung eines oder mehrerer Sollbestände automatisch eine Nachbestellung veranlaßt.

An Schritt S2 schließt sich ein Schritt S3 an, in dem die Geräte-Chipkarte 4 Daten, insbesondere Bestelldaten, über den Homebus 1, das Gateway 5 und das externe Netzwerk 6 an den Online-Händler, d.h. den externen Kommunikationspartner 7, übermittelt. Zusammen mit den Bestelldaten werden im Schritt S3 die für eine Authentisierung erforderliche Authentisierungsdaten auf dem gleichen Weg übertragen. Die Geräte-Chipkarte 4 kommuniziert dabei gemäß dem Protokoll, das auch von dem externen Netzwerk 6 verwendet wird, im Falle des Internets insbesondere dem TCP/IP-Protokoll. Wegen der abschnittsweisen Übertragung der Daten über den Homebus 1 kann es allerdings erforderlich sein, die TCP/IP Daten in Paketen des Homebus-Protokolls, d.h. durch sogenanntes "Tunneling", zu transportieren.

Im folgenden Schritt S4 erfolgt als Rückmeldung eine Datenübertragung von dem Online-Händler, d.h. dem externen Kommunikationspartner 7 über das externe Netzwerk 6, das Gateway 5 und den Homebus 1 an die Geräte-Chipkarte 4. Im Rahmen dieser Datenübertragung kann beispielsweise eine Bestätigung der Bestellung und eine Mitteilung des Liefertermins durch den Online-Händler erfolgen.

Im Schritt S5 werden die in der Geräte-Chipkarte 4 abgelegten Informationen mit Hilfe der in Schritt S4 übermittelten Daten aktualisiert. Schließlich erfolgt noch eine Datenübertragung von der Geräte-Chipkarte 4 an das Gerät 2, mit der beispielsweise eine Bestätigung des Vorgangs an den Kühlschrank 2 übermittelt wird.

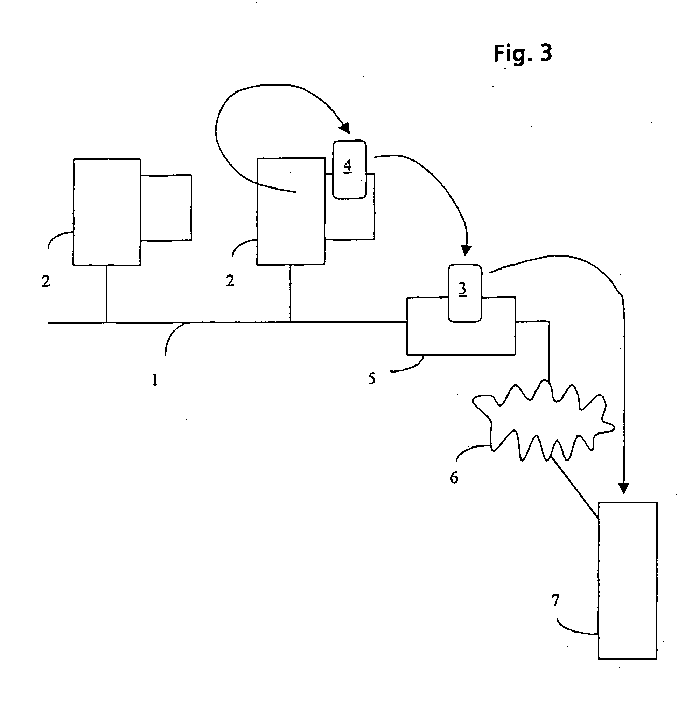

Der vorstehend beschriebene, grundsätzliche Funktionsablauf kann vielfältig abgewandelt, insbesondere an die jeweils gegebene Chipkartenstruktur angepaßt werden. Eine erste besonders zweckmäßige Abwandlung ist in Fig. 3 veranschaulicht. Zwischen die Geräte-Chipkarte 4 und den externen Kommunikationspartner 7 ist hier eine Benutzer-Chipkarte 3 geschaltet und in den Funktionsablauf eingebunden. Die Benutzer-Chipkarte 3 befindet sich im Zugriff des Gateways 5. Auf der Benutzer-Chipkarte 3 sind haushalts- und bestellungsbezogene Daten abgelegt wie die URLs auszuwählender Online-Händler oder Services, Bankverbindungen, Kreditkartennummern, Bezahlungswege u.s.w. Auf der Geräte-Chipkarte 4 befinden sich Daten zur Feststellung der Notwendigkeit zur Nachbestellung, also insbesondere Sollbestandsdaten. Die Benutzer-Chipkarte 3 kann einer Familie, einem Haushalt oder einem einzelnen Haushaltsmitglied zugeordnet sein.

Der Funktionsablauf erfolgt grundsätzlich analog zu den anhand Fig. 2 erläuterten und umfaßt zunächst die Schritte S1 und S2. Schritt S3 erfolgt dann in modifizierter Form. Nach Feststellung der Bestelldaten durch die Geräte-Chipkarte 4 erfolgt nun die Einbeziehung der Benutzer-Chipkarte 3. Darauf befinden sich zur Vervollständigung der Bestellung benötigte Daten wie die Angabe des jeweils auszuwählenden Online-Händlers oder Angaben zum zu benutzenden Zahlungsweg. Unter Verwendung dieser Angaben veranlaßt das Gateway 5 in Zusammenwirkung mit der Benutzer-Chipkarte 3 die Durchführung der Bestellung bei dem gewählten Online-Händler bzw. Kommunikationspartner 7. Durch Ausführung einer wechselseitigen Authentisierung sowie durch Einsatz geeigneter Verschlüsselungstechniken gewährleistet die Benutzer-Chipkarte 3 dabei eine sichere Durchführung des Bestellvorganges.

Die Rückmeldung des Kommunikationspartners 7 bzw. des Online-Händlers in Schritt S4 erfolgt an die Benutzer-Chipkarte 3. Analog zum Beispiel nach Fig.2 wird sodann Schritt S5 ausgeführt.

Mit der in Fig.3 veranschaulichten Ausgestaltung wird eine von der Geräte-Chipkarte 4 veranlaßte Bestellung unter der Regie der Benutzer-Chipkarte 3 abgewickelt und auf deren Daten abgestimmt. Der gesamte Bestellvorgang, insbesondere der Bezahlungsvorgang wird dadurch gegen Manipulation gesichert und zugleich einer Kontrolle unterzogen. Die Benutzer-Chipkarte 3 arbeitet hier als "Proxy" für die Geräte-Chipkarte 4.

Die Bestellung kann dabei abhängig von auf der Benutzer-Chipkarte 3 vermerkten, benutzerbezogenen Vorgaben, etwa individuell gewünschten Sollbeständen durchgeführt werden und dadurch den Bedürfnissen des jeweiligen Benutzers Rechnung tragen. Eine entsprechende Benutzer-Chipkarte 3 kann auch einer Familie oder einem Haushalt zugeordnet sein.

Eine andere Abwandlung des in Fig. 2 dargestellten Funktionsablaufes besteht ergibt sich, wenn das Homebus-System ohne Geräte-Chipkarte 4 betrieben wird. In diesem Fall befinden sich alle sonst auf der Geräte-Chipkarte 4 gespeicherten Daten, insbesondere auch die gerätebezogenen Personalisierungsdaten, auf der Benutzer-Chipkarte 3, die Geräte-Chipkarte 4 wird mithin durch die Benutzer-Chipkarte 3 ersetzt. In diesem Fall wird der Funktionsablauf wie zuvor beschrieben, jedoch vollständig unter Kontrolle der Benutzer-Chipkarte 3 durchgeführt. Für das Beispiel der Bestellung bedeutet dies, daß die Bestellung nur dann durchgeführt werden kann, wenn eine Benutzer-Chipkarte 3 mit dem Gateway 5 verbunden ist.

Die Bestelldaten werden bei dieser Variante besonders eng an den Benutzer gekoppelt, dessen Benutzer-Chipkarte 3 für die Durchführung der Bestellung verwendet wird. Infolgedessen können bei einer gegebenen Bevorratungssituation etwa eines Kühlschranks abhängig davon, welche Benutzer-Chipkarte 3 für die Bestellung verwendet wird, unterschiedliche Bestellungen ausgelöst werden. Auf der für die Bestellung herangezogenen Benutzer-Chipkarte 3 können dabei unterschiedliche, situationsangepaßte Profile vorhanden sein, beispielsweise ein Normal-Profil, ein Urlaubs-Profil, ein Diät-Profil oder ein Party-Profil, durch die verschiedene Standardsituationen nachgestellt werden. Abhängig davon, welches dieser Profile aktiviert wurde, werden dann bei gleicher Ausgangssituation entsprechend unterschiedliche Bestellungen ausgelöst.

## Patentansprüche

1. Homebus-System mit mehreren Geräten (2), die durch einen Homebus (1) miteinander vernetzt und über ein Gateway (5) an ein externes Netzwerk (6) angeschlossen sind, an welches ein externer Kommunikationspartner (7) angeschlossen ist, wobei zur Unterstützung oder Durchführung der Abwicklung einer Kommunikation mit dem externen Kommunikationspartner (7) wenigstens ein tragbarer Datenträger (3, 4) vorgesehen ist,
**dadurch gekennzeichnet, daß** wenigstens einem Gerät (2) ein eigener tragbarer Datenträger (4) zugeordnet ist, auf den das Gerät (2) mittels einer Lesevorrichtung zugreifen kann, wobei auf dem tragbaren Datenträger (4) für das Gerät (2) spezifische Daten, welche für zumindest eine Einstellung des Gerätes (2) einen Vorgabewert umfassen, sowie zumindest eine Software, um auf eine Mitteilung des Gerätes (2) zu reagieren und daraufhin eine Datenübertragung über das Gateway (5) an den externen Kommunikationspartner (7) zu veranlassen, gespeichert sind, wobei der tragbare Datenträger (4) prüft, ob der aktuelle Wert für die Einstellung dem Vorgabewert entspricht und wenn der aktuelle Wert von dem Vorgabewert abweicht, die Kommunikation mit dem externen Kommunikationspartner (7) abgewickelt wird.

2. System nach Anspruch 1, **dadurch gekennzeichnet, daß** dem Gateway (5) zumindest ein weiterer tragbarer Datenträger (3) zugeordnet ist, auf dem Daten zur Herstellung eines Kontaktes zu einem externen Kommunikationspartner (7) gespeichert sind.

3. System nach Anspruch 2, **dadurch gekennzeichnet, daß** auf dem dem Gerät (2) zugeordneten tragbaren Datenträger (4) nur gerätespezifische und auf dem weiteren tragbaren Datenträger (3) benutzerspezifische Informationen gespeichert sind.

4. System nach Anspruch 2, **dadurch gekennzeichnet, daß** der tragbare Datenträger (3) einen Zugriff auf den Homebus (1) nur nach Authentisierung erlaubt.

5. System nach Anspruch 1, **dadurch gekennzeichnet, daß** der tragbare Datenträger (3, 4) in der Lage ist, gemäß einem Protokoll des externen Netzwerks (6) zu kommunizieren.

6. System nach Anspruch 1, **dadurch gekennzeichnet, daß** der tragbare Datenträger (3,4) dazu eingerichtet ist, das Protokoll des externen Netzwerks (6) durch das Homebus-Protokoll zu einem Gateway (5), welcher den Homebus (1) mit dem externen Netzwerk (6) verbindet, zu "tunneln".

7. System nach einem der vorhergehenden Ansprüche, **dadurch gekennzeichnet, daß** der tragbare Datenträger (3, 4) in der Lage ist, gemäß dem TCP/ IP-Protokoll zu kommunizieren.

8. System nach einem der vorhergehenden Ansprüche, **dadurch gekennzeichnet, daß** auf dem tragbaren Datenträger (3) und/oder den tragbaren Datenträger (4) für wenigstens eines der Geräte (2) Daten zur Durchführung einer Bestellung bei einem externen Kommunikatiorispartner (7) gespeichert sind.

9. System nach Anspruch 2, **dadurch gekennzeichnet, daß** wenigstens einem Benutzer ein eigener tragbarer Datenträger (3) zugeordnet ist.

10. System nach einem der vorhergehenden Ansprüche, **dadurch gekennzeichnet, daß** der tragbare Datenträger (3, 4) als Chipkarte ausgebildet ist.

11. Verfahren zum Betreiben eines Homebus-Systems, das mehrere Geräte (2) aufweist, die durch einen Homebus (1) miteinander vernetzt und über ein Gateway (5) an ein externes Netzwerk (6) angeschlossen sind, an welches auch ein externer Kommunikationspartner (7) angeschlossen ist, wobei zur Unterstützung oder Durchführung der Abwicklung einer Kommunikation mit dem externen Kommunikationspartner (7) wenigstens ein tragbarer Datenträger (3, 4) vorgesehen ist, **dadurch gekennzeichnet, daß**
- mit Hilfe eines tragbaren Datenträgers (4) wenigstens einem. Gerät (2) für das Gerät (2) spezifische Daten zugeordnet werden, welche für zumindest eine Einstellung des Gerätes (2) einen Vorgabewert umfassen,
- geprüft wird, ob der aktuelle Wert für die Einstellung des Gerätes (2) dem Vorgabewert entspricht, und,
- wenn der aktuelle Wert von dem Vorgabewert abweicht, die Kommunikation mit dem externen Kommunikationspartner (7) abgewickelt wird.

12. Verfahren nach Anspruch 11, **dadurch gekennzeichnet, daß** dem Gerät (2) durch Verbindung mit dem tragbaren Datenträger (3, 4) eine Netzadresse und ein Schlüssel für die Kommunikation mit externen Kommunikationspartnern (7) zugeordnet werden.

13. Verfahren nach einem der Ansprüche 11 oder 12, **dadurch gekennzeichnet, daß** der tragbare Datenträger (4) dem Gerät (2) dauerhaft zugeordnet wird.

14. Verfahren nach einem der Ansprüche 12 oder 13, **dadurch gekennzeichnet, daß** gerätespezifische Daten von dem tragbaren Datenträger (3) auf das Gerät (2) übertragen werden.

15. Verfahren nach einem der Ansprüche 11 bis 14, **dadurch gekennzeichnet, daß** bei der Kommunikation mit dem externen Kommunikationspartner (7) eine Authentisierung des externen Kommunikationspartners (7) gegen den tragbaren Datenträger (3, 4) durchgeführt wird.

16. Verfahren nach Anspruch 15, **dadurch gekennzeichnet, daß** die Authentisierung des externen Kommunikationspartners (7) mittels eines in dem Homebus-System einsetzbaren tragbaren Datenträgers (3) erfolgt.

17. Verfahren nach Anspruch 16, **dadurch gekennzeichnet, daß** die Datenübertragung im Rahmen der Kommunikation mit dem externen Kommunikationspartner (7) mittels der für die Authentisierung genutzten tragbaren Datenträger (3, 4) verschlüsselt wird.

18. Verfahren nach Anspruch 11, **dadurch gekennzeichnet, daß** auf zumindest einem tragbaren Datenträger (3) benutzerbezogene Daten gespeichert werden, die zur Durchführung einer Kommunikation mit einem externen Kommunikationspartner (7) erforderlich sind.

19. Verfahren nach Anspruch 11, **dadurch gekennzeichnet, daß** die Kommunikation mit einem externen Kommunikationspartner (7) erfolgt, indem zunächst unter Verwendung von auf einem ersten tragbaren Datenträger (4) gespeicherten, für ein erstes Gerät (2) spezifischen Daten eine Datenübertragung an ein zweites an den Homebus (1) angeschlossenes Gerät (5) erfolgt, das auf einen zweiten Datenträger (3) zugreift, auf dem benutzerspezifische Daten gespeichert sind, und unter Verwendung der auf dem zweiten Datenträger (3) gespeicherten Daten anschließend eine Datenübertragung zu dem externen Kommunikationspartner (7) erfolgt.

20. Verfahren nach einem der Ansprüche 11 bis 19, **dadurch gekennzeichnet, daß** im Rahmen der Kommunikation mit dem externen Kommunikationspartner (7) eine Bestellung für eines der Geräte (2) durchgeführt wird.

21. Verfahren nach Anspruch 20, **dadurch gekennzeichnet, daß** die Durchführung der Bestellung von der Relation zwischen dem tatsächlichen Bestand eines Bestellguts und einem auf dem tragbaren Datenträger (3, 4) gespeicherten Vorgabewert für den Bestand des Bestellguts abhängt.

## Claims

1. A home bus system having a plurality of devices (2) which are networked with each other by a home bus (1) and connected via a gateway (5) to an external network (6) to which an external communication partner (7) is connected, with at least one portable data carrier (3, 4) being provided for supporting or carrying out the processing of a communication with the external communication partner (7), **characterized in that** at least one device (2) has its own portable data carrier (4) associated therewith which the device (2) can access by means of a reading apparatus, the portable data carrier (4) having stored thereon data specific to the device (2) which comprise a predetermined value for at least one setting of the device (2), and at least one software program in order to react to a communication from the device (2) and thereupon cause a data transmission to the external communication partner (7) via the gateway (5), whereby the portable data carrier (4) checks whether the actual value of the setting corresponds to the predetermined value and if the actual value deviates from the predetermined value the communication with the external communication partner (7) is processed.

2. The system according to claim 1, **characterized in that** the gateway (5) has at least one further portable data carrier (3) associated therewith which has data stored thereon for establishing a contact with an external communication partner (7).

3. The system according to claim 2, **characterized in that** the portable data carrier (4) associated with the device (2) has stored thereon only device-specific information, and the further portable data carrier (3) user-specific information.

4. The system according to claim 2, **characterized in that** the portable data carrier (3) permits access to the home bus (1) only after authentication.

5. The system according to claim 1, **characterized in that** the portable data carrier (3, 4) is able to communicate according to a protocol of the external network (6).

6. The system according to claim 1, **characterized in that** the portable data carrier (3, 4) is adapted to "tunnel" the protocol of the external network (6) through the home bus protocol to a gateway (5) which connects the home bus (1) to the external network (6).

7. The system according to any of the previous claims, **characterized in that** the portable data carrier (3, 4) is able to communicate according to the TCP/IP protocol.

8. The system according to any of the previous claims, **characterized in that** the portable data carrier (3) and/or the portable data carrier (4) for at least one of the devices (2) has data stored thereon for carrying out an order placed with an external communication partner (7).

9. The system according to claim 2, **characterized in that** at least one user has his own portable data carrier (3) associated with him.

10. The system according to any of the previous claims, **characterized in that** the portable data carrier (3, 4) is configured as a chip card.

11. A method for operating a home bus system having a plurality of devices (2) which are networked with each other by a home bus (1) and connected via a gateway (5) to an external network (6) to which an external communication partner (7) is also connected, with at least one portable data carrier (3, 4) being provided for supporting or carrying out the processing of a communication with the external communication partner (7),
**characterized in that**
- by means of a portable data carrier (4) there are associated with at least one device (2) data specific to the device (2) which comprise a predetermined value for at least one setting of the device (2),
- it is checked whether the actual value of the setting of the device (2) corresponds to the predetermined value, and
- if the actual value deviates from the predetermined value the communication with the external communication partner (7) is processed.

12. The method according to claim 11, **characterized in that** there are associated with the device (2) by connection with the portable data carrier (3, 4) a network address and a key for communication with external communication partners (7).

13. The method according to either of claims 11 and 12, **characterized in that** the portable data carrier (4) is associated with the device (2) permanently.

14. The method according to either of claims 12 and 13, **characterized in that** device-specific data are transmitted from the portable data carrier (3) to the device (2).

15. The method according to any of claims 11 to 14, **characterized in that** upon the communication with the external communication partner (7) an authentication of the external communication partner (7) against the portable data carrier (3, 4) is carried out.

16. The method according to claim 15, **characterized in that** the authentication of the external communication partner (7) is effected by means of a portable data carrier (3) usable in the home bus system.

17. The method according to claim 16, **characterized in that** the data transmission during the communication with the external communication partner (7) is encrypted by means of the portable data carriers (3, 4) used for the authentication.

18. The method according to claim 11, **characterized in that** at least one portable data carrier (3) has stored thereon user-related data which are necessary for carrying out a communication with an external communication partner (7).

19. The method according to claim 11, **characterized in that** the communication with an external communication partner (7) is effected in such a way that first, using data stored on a first portable data carrier (4) and specific to a first device (2), a data transmission is effected to a second device (5) which is connected to the home bus (1) and accesses a second data carrier (3) storing user-specific data, and, using the data stored on the second data carrier (3), a data transmission is subsequently effected to the external communication partner (7).

20. The method according to any of claims 11 to 19, **characterized in that** during the communication with the external communication partner (7) an order for one of the devices (2) is carried out.

21. The method according to claim 20, **characterized in that** the carrying out of the order depends on the relation between the actual stock of an ordered product and a predetermined value for the stock of the ordered product that is stored on the portable data carrier (3, 4).

## Revendications

1. Système de bus domotique comprenant plusieurs appareils (2) connectés entre eux par un bus domotique (1) et reliés par une passerelle (5) à un réseau externe (6) auquel est relié un partenaire externe de communication (7), au moins un support de données portable (3, 4) étant prévu pour le soutien ou l'exécution du déroulement d'une communication avec le partenaire externe de communication (7), **caractérisé en ce qu'**un propre support de données portable (4) est affecté à au moins un appareil (2) qui peut avoir accès à ce dernier au moyen d'un dispositif de lecture, des données spécifiques pour l'appareil (2) et comprenant une valeur prédéterminée pour au moins un réglage de l'appareil (2) ainsi qu'au moins un logiciel pour réagir à un message de l'appareil (2) et pour provoquer sur ce une transmission de données par la passerelle (5) au partenaire externe de communication (7) étant mémorisés sur le support de données portable (4), le support de données portable (4) vérifiant si la valeur actuelle pour le réglage correspond à la valeur prédéterminée, la communication étant effectuée avec le partenaire externe de communication (7) quand valeur actuelle diffère de la valeur prédéterminée.

2. Système selon la revendication 1, **caractérisé en ce qu'**au moins un autre support de données portable (3) sur lequel des données pour l'établissement d'un contact avec un partenaire externe de communication (7) sont mémorisées est affecté à la passerelle (5).

3. Système selon la revendication 2, **caractérisé en ce qu'**uniquement des informations spécifiques à l'appareil sont mémorisées sur le support de données portable (4) affecté à l'appareil (2) et **en ce que** des informations spécifiques à l'utilisateur sont mémorisées sur l'autre support de données portable (3).

4. Système selon la revendication 2, **caractérisé en ce que** le support de données portable (3) n'autorise un accès au bus domotique (1) qu'après authentification.

5. Système selon la revendication 1, **caractérisé en ce que** le support de données portable (3, 4) est en mesure de communiquer conformément à un protocole du réseau externe (6).

6. Système selon la revendication 1, **caractérisé en ce que** le support de données portable (3, 4) est équipé pour faire passer comme à travers un tunnel le protocole du réseau externe (6) à travers le protocole de bus domotique, l'amenant de la sorte à une passerelle (5) qui relie le bus domotique (1) au réseau externe (6).

7. Système selon une des revendications précédentes, **caractérisé en ce que** le support de données portable (3, 4) est en mesure de communiquer conformément au protocole TCP/IP.

8. Système selon une des revendications précédentes, **caractérisé en ce que**, pour au moins un des appareils (2), des données sont mémorisées sur le support de données portable (3) et / ou sur le support de données portable (4) pour l'exécution d'une commande chez un partenaire externe de communication (7).

9. Système selon la revendication 2, **caractérisé en ce qu'**un propre support de données portable (3) est affecté à au moins un utilisateur.

10. Système selon une des revendications précédentes, **caractérisé en ce que** le support de données portable (3, 4) est réalisé sous forme de carte à puce.

11. Procédé d'exploitation d'un système de bus domotique comportant plusieurs appareils (2) connectés entre eux par un bus domotique (1) et reliés par une passerelle (5) à un réseau externe (6) auquel est relié aussi un partenaire externe de communication (7), au moins un support de données portable (3, 4) étant prévu pour le soutien ou l'exécution du déroulement d'une communication avec le partenaire externe de communication (7),
**caractérisé en ce que**
■ des données spécifiques pour l'appareil (2) et comprenant une valeur prédéterminée pour au moins un réglage de l'appareil (2) sont affectées à au moins un appareil (2) à l'aide d'un support de données portable (4),
■ il est vérifié si la valeur actuelle pour le réglage de l'appareil (2) correspond à la valeur prédéterminée, et
■ quand valeur actuelle diffère de la valeur prédéterminée, la communication est effectuée avec le partenaire externe de communication (7).

12. Procédé selon la revendication 11, **caractérisé en ce qu'**une adresse réseau et une clé pour la communication avec des partenaires externes de communication (7) sont affectées à l'appareil (2) par connexion avec le support de données portable (3, 4).

13. Procédé selon une des revendications 11 ou 12, **caractérisé en ce que** le support de données portable (4) est durablement affecté à l'appareil (2).

14. Procédé selon une des revendications 12 ou 13, **caractérisé en ce que** des données spécifiques à l'appareil sont transmises à l'appareil (2) par le support de données portable (3).

15. Procédé selon une des revendications de 11 à 14, **caractérisé en ce qu'**une authentification par le partenaire externe de communication (7) est effectuée contre le support de données portable (3, 4) lors de la communication avec le partenaire externe de communication (7).

16. Procédé selon la revendication 15, **caractérisé en ce que** l'authentification du partenaire externe de communication (7) a lieu au moyen d'un support de données portable (3) utilisable dans le système de bus domotique.

17. Procédé selon la revendication 16, **caractérisé en ce que** la transmission de données ayant lieu dans le cadre de la communication avec le partenaire externe de communication (7) est cryptée au moyen des supports de données portables (3, 4) utilisés pour l'authentification.

18. Procédé selon la revendication 11, **caractérisé en ce que** des donnés relatives à l'utilisateur et nécessaires au déroulement d'une communication avec un partenaire externe de communication (7) sont mémorisées sur au moins un support de données portable (3).

19. Procédé selon la revendication 11, **caractérisé en ce que** la communication avec un partenaire externe de communication (7) a lieu tout d'abord **en ce qu'**une transmission de données à un deuxième appareil (5) connecté au bus domotique (1) est effectuée en utilisant des données spécifiques pour un premier appareil (2) et mémorisées sur un premier support de données portable (4), le deuxième appareil (5) ayant accès à un deuxième support de données portable (3) sur lequel des données spécifiques à l'utilisateur sont mémorisées, et une transmission au partenaire externe de communication (7) s'opérant ensuite en utilisant les données mémorisées sur le deuxième support de données portable (3).

20. Procédé selon une des revendications de 11 à 19, **caractérisé en ce qu'**une commande pour l'un des appareils (2) est effectuée dans le cadre de la communication avec le partenaire externe de communication (7).

21. Procédé selon la revendication 20, **caractérisé en ce que** l'exécution de la commande dépend de la relation entre le stock effectif d'un bien faisant l'objet éventuel de la commande et une valeur prédéterminée mémorisée sur le support de données portable (3, 4) pour le stock du bien faisant l'objet éventuel de la commande.
